# EUROPEAN PATENT SPECIFICATION

(11) **EP 1 926 327 B1**
(45) Date of publication and mention of the grant of the patent: **10.10.2012**
(21) Application number: 05777985.2
(22) Date of filing: 22.08.2005
(51) Int. Cl.: H04W 84/00

(54) **A METHOD FOR TRANSMITTING GROUP DEDICATED SIGNALING USING DATA INTERFACE IN GROUP COMMUNICATION**
VERFAHREN ZUM SENDEN VON GRUPPENGEWIDMETER SIGNALISIERUNG UNTER VERWENDUNG EINER DATENSCHNITTSTELLE BEI DER GRUPPENKOMMUNIKATION
PROCÉDÉ POUR TRANSMETTRE UN SIGNALEMENT DE GROUPE DÉDIÉ À L'AIDE D'UNE INTERFACE DE DONNÉES DANS LA COMMUNICATION DE GROUPE

(43) Date of publication of application: 28.05.2008
(73) Proprietor: ZTE Corporation, 518057 Shenzhen City, Guangdong Province (CN)
(72) Inventor: ZHAN, Bei, 518057 Shenzhen City, Guangdong Province (CN); HUANG, Chi, 518057 Shenzhen City, Guangdong Province (CN); XIE, Guosheng, 518057 Shenzhen City, Guangdong Province (CN); WANG,Weiquan, 518057 Shenzhen City, Guangdong Province (CN)
(74) Representative: Persson, Albin
(86) International application number: PCT/CN2005/001310
(87) International publication number: WO 2007/022660

(56) References cited:
- WO-A1-2004/086791
- WO-A2-02/09454
- CN-A- 1 567 791
- US-A1- 2003 086 423
- US-A1- 2004 042 438
- US-A1- 2004 107 294
- US-A1- 2005 122 922
- 3GPP2: "Interoperability Specification (IOS) for cdma2000 11Access Network Interfaces - Part 2 Transport", 3GPP2-DRAFTS, 31 December 2004 (2004-12-31), XP040357790, 3GPP2, 2500 WILSON BOULEVARD, SUITE 300, ARLINGTON, VIRGINIA 22201 USA
- DOMMETY CISCO SYSTEMS G: "Key and Sequence Number Extensions to GRE; rfc2890.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, INTERNET ENGINEERING TASK FORCE, IETF, CH, 1 September 2000 (2000-09-01), XP015008673, ISSN: 0000-0003

## Description

### TECHNICAL FIELD OF THE INVENTION

The present invention relates to a method for transmitting trunking dedicated signaling, especially relates to a method for transmitting trunking dedicated signaling using data interface in trunking communication field based on Code Division Multiple Access (CDMA).

### BACKGROUND OF THE INVENTION

Trunking communication is an important branch of wireless communication and is mainly applied in the field of professional mobile communications. The trunking communication system based on CDMA technology combines the CDMA technology with dedicated dispatching communication system, it extends the service scope of cell communication system and enables the trunking communication system to get rid of the limitation of dedicated dispatching communication system in terms of capability and area.

CDMA trunking system network consists of trunking terminals, base station systems/ dispatching clients and dispatching servers etc, wherein the base station systems/dispatching clients connect with the dispatching servers via A10/A11 interfaces and connect with the trunking terminals via air interfaces.

As a professional trunking system, the CDMA trunking system needs to realize the function of group call, possess the features of rapid access and large capacity. In order to realize these functions and performance, a large amount of information interactions need to be carried out between a base station system and a trunking terminal, and a dispatching server and a terminal. Such information is called trunking dedicated signaling, which is mainly used to perform professional trunking functions such as talk right application, emergency call and status query etc. However, there is no definition for such information in CDMA standard protocol.

In trunking communication system, a trunking dispatching server is the master control point for group call and has the functions of call setup, location management, user authentication and service distribution etc. A trunking dispatching client sets up the dedicated signaling link to a trunking dispatching server, and encapsulates and transports the group call-related trunking dedicated signalings between the base station controller and the trunking dispatching server. These trunking dedicated signalings are used to perform all kinds of processes of group call and realize all functions of the trunking communication system, such as group call request message, group call connection message, trunking location registration request message, trunking location registration acceptance message, group call release instruction and group management message etc.

Nowadays, both trunking dispatching server and client support A10 and A11 interfaces defined in IS2000 standard. A10 interface is the interface for transmitting packet data, and A11 interface is the interface for maintaining A10 link.

For example, Document US 2004/0042438 A1 discloses methods and systems for implementing trunking techniques in CDMA systems for handling group calls and push-to-talk services, in which a dedicated common trunking message link (CTML) is used between the dispatching client and the dispatching server, with A10/A11 interfaces.

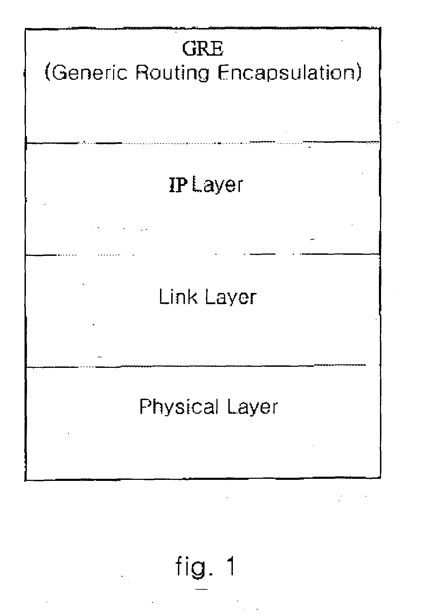

However, as shown in Figure 1 which is the structural diagram of A10 interface protocol stack, based on the protocol stack structure, in the innermost layer of GRE (Generic Routing Encapsulation) is user's data packet. This packet is transparent to the trunking dispatching server and the trunking dispatching client, and these two entities do not deal with the user's packet. So, it can be seen that without further encapsulation, the trunking dedicated signaling can not be transmitted between the trunking dispatching server and the trunking dispatching client by using the standard A10 interface, and the trunking function also can not be realized.

### SUMMARY OF THE INVENTION

The present invention provides a method for transmitting trunking dedicated signaling using data interface in trunking communication as in claim 1, including the following steps of:
establishing a trunking dedicated signaling link between the trunking signaling transmitter and the trunking signaling receiver; and
the trunking signaling transmitter encapsulating the message carrying the trunking dedicated signaling into the innermost layer of said data interface, and sends the message to the trunking signaling receiver over the established trunking dedicated signaling link.

Said step of the trunking signaling transmitter encapsulating the message carrying the trunking dedicated signaling into the innermost layer of said data interface includes the following step of:
using an identifier to represent that there is a trunking dedicated signaling encapsulated in this message.

In the method, said data interface is A10 interface of IS2000 standard, said innermost layer is Generic Routing Encapsulation (GRE), and said identifier is GREKey sign.

Said method may further include the following step of:
removing the trunking dedicated signaling link after finishing the trunking dedicated signaling transmission.

The method according to the present invention, neither needing to increase new interface, nor needing to modify the protocol stack of the existing standard interface, but only needing further encapsulation on the basis of the existing data interface, can support the transmission of trunking dedicated signaling. This method has the advantages of small modification, good extensibility and compatibility; therefore it can solve the problem of transmitting trunking dedicated signaling using data interface in trunking communication.

### BRIEF DESCRIPTION OF THE DRAWINGS

Figure 1 is a structural diagram of standard A10 interface protocol stack;
Figure 2 is a flow chart of the method of transmitting trunking dedicated signaling using data interface according to the present invention;
Figure 3 is a structural diagram of the protocol stack of the trunking signaling link according to the present invention;
Figure 4 is a schematic view of the process of setting up the connection by the base station between the trunking dispatching client and the trunking dispatching server;
Figure 5 is a schematic view of the process of removing the connection by the base station between the trunking dispatching client and the trunking dispatching server;
Figure 6 is a flow chart of trunking registration according to the present invention.

### PREFERRED EMBODIMENT OF THE INVENTION

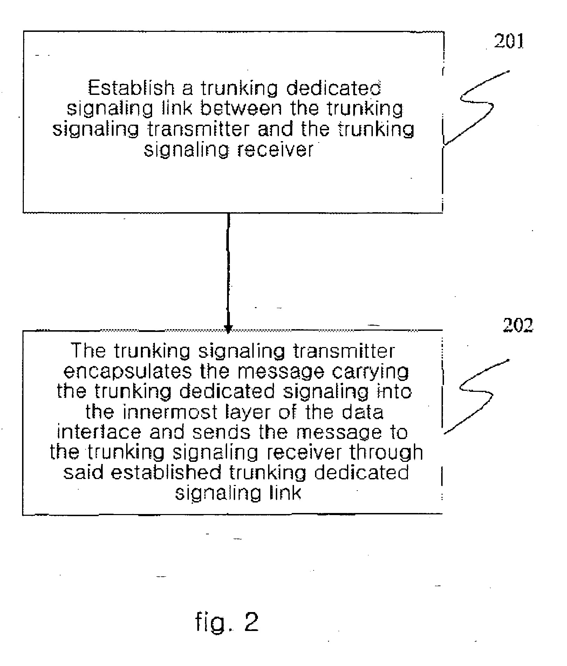

Figure 2 is a flow chart of the method of transmitting trunking dedicated signaling using data interface according to the present invention.

Firstly, a trunking dedicated signaling link is established between the trunking signaling transmitter and the trunking signaling receiver (step 201);

Secondly, the trunking signaling transmitter encapsulates the message carrying the trunking dedicated signaling into the innermost layer of the data interface, and sends the message to the trunking signaling receiver over the established trunking dedicated signaling link (step 202).

Said method further includes the following step:
the trunking dedicated signaling link is removed after finishing the trunking dedicated signaling transmission.

Said step of the trunking signaling transmitter encapsulating the message carrying trunking dedicated signaling into the innermost layer of the data interface includes the following step:
an identifier is used to represent that there is a trunking dedicated signaling encapsulated in the message.

In the method, said data interface is A10 interface of IS2000 standard, said innermost layer is GRE, and said identifier is GREKey sign.

The method according to the present invention, neither needing to increase new interface, nor needing to modify the protocol stack of the existing standard interface, but only needing further encapsulation on the basis of the standard data interface, can support the transmission of trunking dedicated signaling.

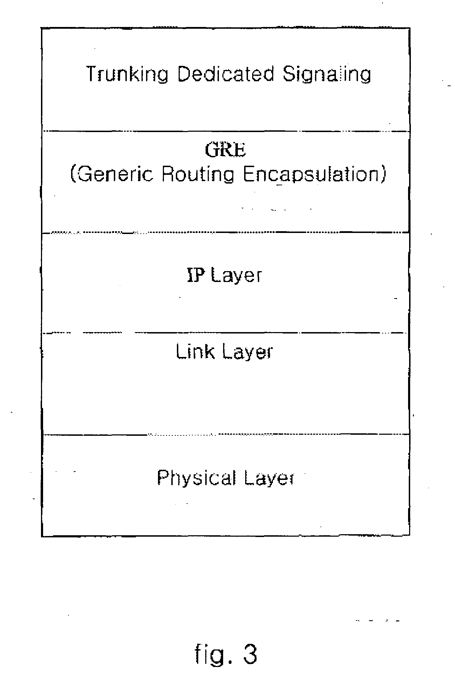

Figure 3 shows the structure of protocol stack of trunking dedicated signaling link according to the present invention. Compared to Figure 1, it can be seen that said method encapsulates the trunking dedicated signaling into GRE, and for GRE, the trunking dedicated signaling is the ordinary data carried by it.

In said step of the trunking signaling transmitter encapsulating the message carrying the trunking dedicated signaling into the innermost layer of the data interface, an identifier GREKey is used to represent that there is a trunking dedicated signaling encapsulated in the message.

Said identifier GREKey is used to distinguish signaling interface and data interface, the packet with GREKey being 0 encapsulates the signaling, and the packet with GREKey not being 0 encapsulates the data.

The format definition of said trunking dedicated signaling refers to the definition of A interface of IS2000 and employs TLV format, in which, T is the message type of each trunking dedicated signaling, L is the length of signaling, V is the content of signaling, i.e. all of the information elements included in each signaling.

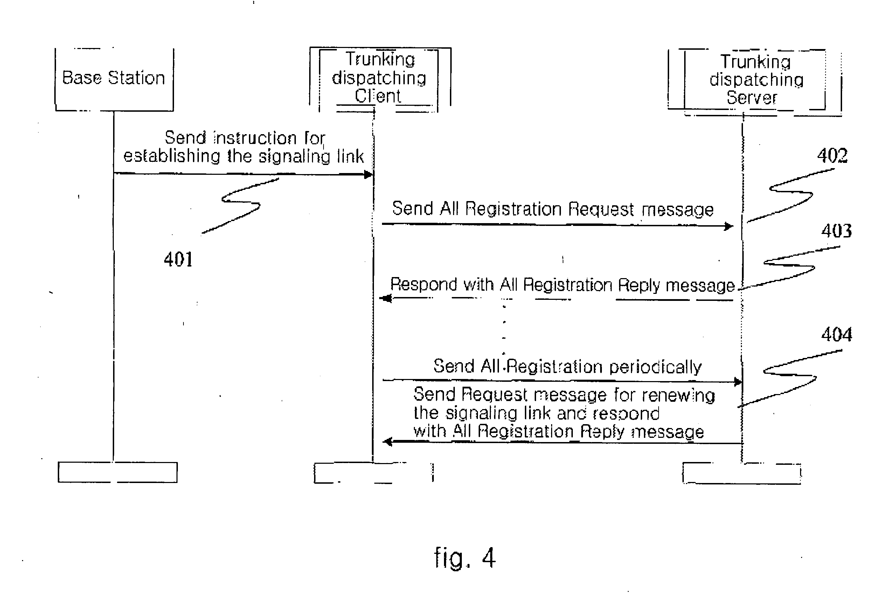

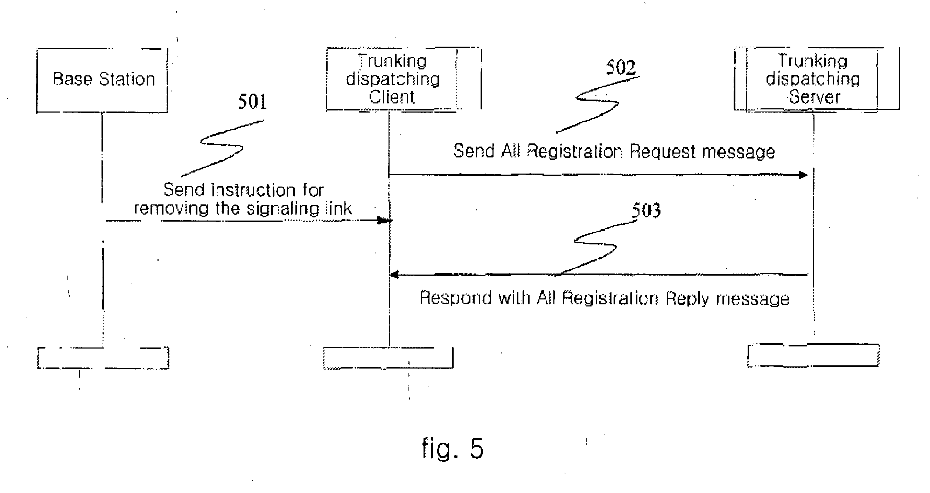

The transmission of trunking dedicated signaling is realized through trunking dedicated signaling link. The trunking dedicated signaling link needs to be set up before the trunking dedicated signaling transmission and be removed after the transmission. The processes of setting up and removing the trunking dedicated signaling link are shown in Figure 4 and Figure 5 respectively.

Figure 4 is a schematic view of the process of setting up the connection by the base station between the trunking dispatching client and the trunking dispatching server, including the steps:
the base station sends an instruction to the trunking dispatching client for establishing trunking dedicated signaling link with the trunking dispatching server (step 401);
the trunking dispatching client sends A11 Registration Request message to the trunking dispatching server to apply for establishing the trunking dedicated signaling link (step 402);
the trunking dispatching server sends A11 Registration Reply message to the trunking dispatching client to accept the application, and the link is set up between them (step 403); and
the trunking dispatching client periodically sends A11 Registration Request message to the trunking dispatching server according to a mutually negotiated time, and the trunking dispatching server sends A11 Registration Reply message to the trunking dispatching client to renew the link (step 404).

Figure 5 is a schematic view of the process of removing the connection established by the base station between the trunking dispatching client and the trunking dispatching server, including the steps:
the base station sends to the trunking dispatching client an instruction for removing the trunking dedicated signaling link with the trunking dispatching server (step 501);
the trunking dispatching client sends A11 Registration Request message to the trunking dispatching server to apply for removing the trunking dedicated signaling link (step 502); and
the trunking dispatching server sends A11 Registration Reply message to the trunking dispatching client to accept the application, and the link between them is removed (step 503).

In the following, the application of the present invention will be illustrated by taking the trunking registration as an example.

The ordinary trunking registration flow needs two trunking dedicated signalings, i.e. trunking registration request message and trunking registration acceptance message. In the present invention, firstly, a message type is assigned to each of the above two messages, the trunking registration request message is 40H and the trunking registration acceptance message is 41 H; then, the specific format of each message is defined which includes all message elements and their locations, in which, the trunking registration request message includes the message elements of the identifier of the registered cell phone, the location information of the registered cell phone, the attributes of the registered cell phone, etc; the trunking registration acceptance message includes the message elements of the identifier of the registered cell phone and the location information of the registered cell phone etc.

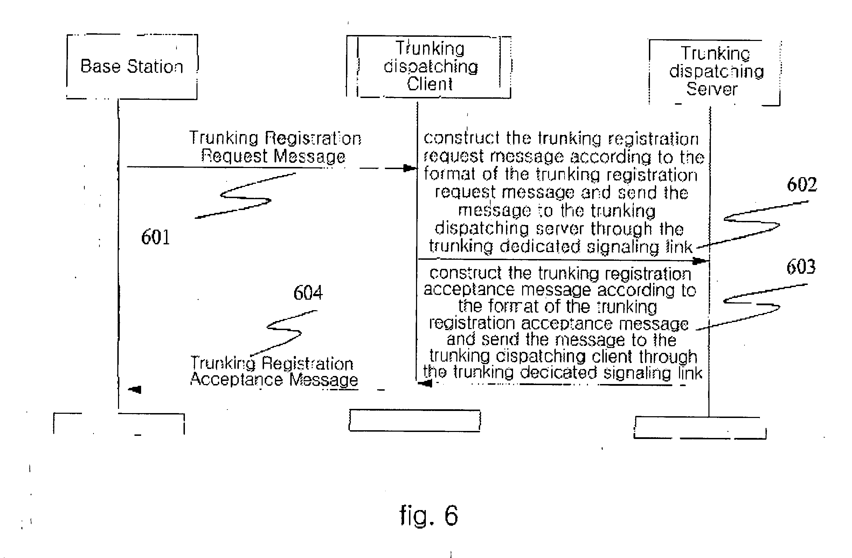

Figure 6 is a flow chart of the trunking registration according to the present invention, including the steps:
the base station sends a trunking registration request to the trunking dispatching client (step 601);
the trunking dispatching client constructs the trunking registration request message according to the format of the trunking registration request message, encapsulates the constructed message into the Generic Routing Encapsulation (GRE) of A10 interface and sends the message to the trunking dispatching server through the trunking dedicated signaling link, and sets GREKey as 0 to represent that the message includes one trunking dedicated signaling (step 602);
the trunking dispatching server, after the registration has been passed through, constructs the trunking registration acceptance message according to the format of the trunking registration acceptance message, encapsulates the constructed message into the Generic Routing Encapsulation (GRE) of A10 interface and sends the message to the trunking dispatching client through the trunking dedicated signaling link, and sets the GREKey as 0 to represent that the message includes one trunking dedicated signaling (step 603); and
the trunking dispatching client sending the instruction of trunking registration acceptance to the base station (step 604).

### INDUSTRIAL APPLICABILITY

The method according to the present invention, neither needing to increase new interface, nor needing to modify the protocol stack of the existing standard interface, but only needing further encapsulation on the basis of the existing data interface, can support the transmission of trunking dedicated signaling, thereby enabling trunking service. Meanwhile, the method has the advantages of small modification, good extensibility and compatibility, therefore it can excellently solve the problem of transmitting trunking dedicated signaling.

## Claims

1. A method for transmitting trunking dedicated signaling in trunking communication, **characterized in that** the trunking dedicated signaling is transmitted using a data interface, the method including the following steps of:
establishing a trunking dedicated signaling link between a trunking signaling transmitter and a trunking signaling receiver; and
the trunking signaling transmitter encapsulating a message carrying trunking dedicated signaling into an innermost layer of said data interface, and sending the message to the trunking signaling receiver over said established trunking dedicated signaling link;
wherein said data interface is A10 interface of IS2000 standard, and said innermost layer is generic routing encapsulation layer; and
wherein said step of the trunking signaling transmitter encapsulating the message carrying the trunking dedicated signaling into the innermost layer of the data interface includes the following step of, and is **characterized by**:
using an identifier to represent that there is one trunking dedicated signaling encapsulated in the encapsulated message, wherein said identifier is GREKey sign.

2. The method of claim 1, further including the following step of:
removing the trunking dedicated signaling link after finishing the trunking dedicated signaling transmission.

3. The method of claim 1, wherein said trunking dedicated signaling employs TLV format and includes message type, length and content of the trunking dedicated signaling.

4. The method of claim 1, wherein said step of establishing the trunking dedicated signaling link includes the following steps of:
a base station sending to a trunking dispatching client an instruction for establishing the trunking dedicated signaling link with a trunking dispatching server;
the trunking dispatching client sending an A11 Registration Request message to the trunking dispatching server to apply for establishing the trunking dedicated signaling link;
the trunking dispatching server sending an A11 Registration Reply message to the trunking dispatching client, accepting the application and establishing the link with the trunking dispatching client.

5. The method of claim 4, wherein after said trunking dedicated signaling link has been established, the following step is further included:
the trunking dispatching client periodically sending the A11 Registration Request message to the trunking dispatching server according to a mutually negotiated time; the trunking dispatching server sending the A11 Registration Reply message to the trunking dispatching client and renewing the trunking dedicated signaling link.

6. The method of claim 2, wherein said step of removing the trunking dedicated signaling link further includes the following steps of:
the base station sending to the trunking dispatching client an instruction of removing the trunking dedicated signaling link with the trunking dispatching server;
the trunking dispatching client sending the A11 Registration Request message to the trunking dispatching server to apply for removing the trunking dedicated signaling link;
the trunking dispatching server sending the A11 Registration Reply message to the trunking dispatching client, accepting the application and removing the link between them.

7. The method of claim 1, wherein said trunking dedicated signaling is trunking registration request message, and said step of the trunking signaling transmitter encapsulating the message into the innermost layer of the data interface and sending the message to the trunking signaling receiver over the trunking dedicated signaling link includes the following step of:
the trunking dispatching client encapsulating the trunking registration request message into the generic routing encapsulation of A10 interface, and sending the message to the trunking dispatching server through the trunking dedicated signaling link, and setting GREKey as 0 to represent that there is one trunking dedicated signaling included in the message.

8. The method of claim 1, wherein said trunking dedicated signaling is trunking registration acceptance message, and said step of the trunking signaling transmitter encapsulating the message into the innermost layer of the data interface and sending the message to the trunking signaling receiver over the trunking dedicated signaling link includes the following step of:
the trunking dispatching server encapsulating the trunking registration accept message into generic routing encapsulation of A10 interface and sending the message to the trunking dispatching client through the trunking dedicated signaling link, and setting GREKey as 0 to represent that there is one trunking dedicated signaling included in the message.

## Patentansprüche

1. Verfahren zum Übertragen einer für den Bündelfunk bestimmten Signalgruppe in einer Bündelfunkkommunikation, **dadurch gekennzeichnet, dass** die für den Bündelfunk bestimmte Signalgruppe unter Verwendung einer Datenschnittstelle übertragen wird, wobei das Verfahren die folgenden Schritte umfasst:
Einrichten einer für den Bündelfunk bestimmten Signalverbindung zwischen einem Bündelfunk-Signalsender und einem Bündelfunk-Signalempfänger; und
wobei der Bündelfunk-Signalsender die für den Bündelfunk bestimmte Signalgruppe tragende Mitteilung in einer innersten Lage der Datenschnittstelle einkapselt und die Mitteilung an den Bündelfunk-Signalempfänger über die eingerichtete, für den Bündelfunk bestimmte Signalverbindung sendet;
wobei die Datenschnittstelle eine A10 Schnittstelle des IS2000 Standards ist und wobei die innerste Lage eine generisch routende Einkapselungslage ist; und
wobei der Schritt des Einkapselns der Mitteilung durch den Bündelfunk-Signalsender, welche die für den Bündelfunk bestimmten Signale in die innerste Lage der Datenschnittstelle trägt, den folgenden Schritt umfasst und **gekennzeichnet ist durch**:
Verwenden eines Identifikators, um wiederzugeben, dass eine für den Bündelfunk bestimmte Signalgruppe in der eingekapselten Mitteilung eingekapselt ist, wobei der Identifikator ein GRE Schlüssel-Zeichen ist.

2. Verfahren nach Anspruch 1, ferner mit dem folgenden Schritt:
Entfernen der für den Bündelfunk bestimmten Signalverbindung nach Beendigen der für den Bündelfunk bestimmten Signalgruppenübertragung.

3. Verfahren nach Anspruch 1, in welchem die für den Bündelfunk bestimmte Signalgruppe ein TLV-Format verwendet und Mitteilungstyp, Länge und Inhalt der für den Bündelfunk bestimmten Signalgruppe beinhaltet.

4. Verfahren nach Anspruch 1, in welchem der Schritt des Einrichtens der für den Bündelfunk bestimmten Signalverbindung die folgenden Schritte enthält:
eine Basisstation sendet an einen mittels Bündelfunk versendenden Clienten einen Befehl zum Einrichten der für den Bündelfunk bestimmten Signalverbindung mit einem mittels Bündelfunk versendenden Server;
der mittels Bündelfunk versendende Client sendet einen A11 Registrierungsanfrage-Mitteilung an den mittels Bündelfunk versendenden Server, um das Einrichten der für den Bündelfunk bestimmten Signalverbindung zu beantragen;
der mittels Bündelfunk versendende Server sendet eine A11 Registrierungsantwort-Mitteilung an den mittels Bündelfunk versendenden Clienten, akzeptiert die Anmeldung und richtet die Verbindung mit dem mittels Bündelfunk versendenden Client ein.

5. Verfahren nach Anspruch 4, in welchem, nachdem die für den Bündelfunk bestimmte Signalverbindung eingerichtet worden ist, der folgende Schritt ferner enthalten ist:
der mittels Bündelfunk versendende Client sendet periodisch die A11 Registrierungsanfrage-Mitteilung an den mittels Bündelfunk versendenden Server gemäß einer wechselseitig ausgehandelten Zeit; der mittels Bündelfunk versendende Server sendet die A11 Registrierungsantwort-Mitteilung an den mittels Bündelfunk versendenden Clienten und erneuert die für den Bündelfunk bestimmte Signalverbindung.

6. Verfahren nach Anspruch 2, in welchem der Schritt des Entfernens der für den Bündelfunk bestimmten Signalverbindung ferner die folgenden Schritte enthält:
die Basisstation sendet an den mittels Bündelfunk versendenden Clienten einen Befehl zum Entfernen der für den Bündelfunk bestimmten Signalverbindung mit dem mittels Bündelfunk versendenden Server;
der mittels Bündelfunk versendende Client sendet die A11 Registrierungsanfrage-Mitteilung an den mittels Bündelfunk versendenden Server, um das Entfernen der für den Bündelfunk bestimmte Signalverbindung zu beantragen;
der mittels Bündelfunk versendende Server sendet die A11 Registrierungsantwort-Mitteilung an den mittels Bündelfunk versendenden Clienten, akzeptiert die Anmeldung und entfernt die Verbindung zwischen diesen.

7. Verfahren nach Anspruch 1, in welchem die für den Bündelfunk bestimmte Signalgruppe eine Bündelfunk-Registrierungsanfrage-Mitteilung ist und der Schritt, in welchem der Bündelfunksignal-Sender, der die Mitteilung in die innerste Lage der Datenschnittstelle einkapselt und die Mitteilung über die für den Bündelfunk bestimmte Signalverbindung an den Bündelfunksignal-Empfänger sendet, den folgenden Schritt umfasst:
der mittels Bündelfunk versendende Client kapselt die Bündelfunk-Registrierungsanfrage-Mitteilung in die generisch routende Einkapselung der A10 Schnittstelle ein und sendet die Mitteilung über die für den Bündelfunk bestimmte Signalverbindung an den mittels Bündelfunk versendenden Server und setzt den GRE-Schlüssel auf 0, um darzustellen, dass eine für den Bündelfunk bestimmte Signalgruppe in der Mitteilung enthalten ist.

8. Verfahren nach Anspruch 1, in welchem die für den Bündelfunk bestimmte Signalgruppe eine Bündelfunk-Registrierungsakzeptanz-Mitteilung ist und der Schritt, in welchem der Bündelfunksignal-Sender die Mitteilung in die innerste Lage der Datenschnittstelle einkapselt und die Mitteilung über die für den Bündelfunk bestimmte Signalverbindung an den Bündelfunksignal-Empfänger sendet, den folgenden Schritt umfasst:
der mittels Bündelfunk versendende Server kapselt die Bündelfunk-Registrierungsakzeptanz-Mitteilung in die generisch routende Einkapselung der A10 Schnittstelle ein und sendet die Mitteilung über die für den Bündelfunk bestimmte Signalverbindung an den mittels Bündelfunk versendenden Clienten und setzt den GRE-Schlüssel auf 0, um darzustellen, dass eine für den Bündelfunk bestimmte Signalgruppe in der Mitteilung enthalten ist.

## Revendications

1. Procédé pour transmettre une signalisation dédiée de partage dans une communication à partage, **caractérisé en ce que** la signalisation dédiée de partage est transmise en utilisant une interface de données, le procédé comprenant les étapes pour :
établir une liaison de signalisation dédiée de partage entre un émetteur de signalisation de partage et un récepteur de signalisation de partage ; et,
encapsuler par l'émetteur de signalisation de partage, un message portant une signalisation dédiée de partage dans une couche la plus intérieure de ladite interface de données, et envoyer le message au récepteur de signalisation de partage par l'intermédiaire de ladite liaison de signalisation dédiée de partage établie ;
dans lequel ladite interface de données est une interface A10 de la norme IS2000, et ladite couche la plus intérieure est une couche d'encapsulation d'acheminement générique ; et
dans lequel ladite étape d'encapsulation, par l'émetteur de signalisation de partage, de l'encapsulation du message portant la signalisation dédiée de partage dans la couche la plus intérieure de l'interface de données comprend l'étape suivante de et est **caractérisée par** :
l'utilisation d'un identifiant pour montrer qu'une signalisation dédiée de partage est encapsulée dans le message encapsulé, dans lequel ledit identifiant est un signe GREKey.

2. Procédé selon la revendication 1, comprenant en outre l'étape suivante d'élimination de la liaison de signalisation dédiée de partage après avoir fini la transmission de signalisation dédiée de partage.

3. Procédé selon la revendication 1, dans lequel ladite signalisation dédiée de partage utilise un format TLV et comprend un type, une longueur et un contenu de message de la signalisation dédiée de partage.

4. Procédé selon la revendication 1, dans lequel ladite étape de l'établissement de la liaison de signalisation dédiée de partage comprend les étapes suivantes :
envoyer, par une station de base, à un client de distribution de partage, une instruction pour établir la liaison de signalisation dédiée de partage avec un serveur de distribution de partage ;
envoyer, par le client de distribution de partage, un message de demande d'enregistrement A11 au serveur de distribution de partage pour faire une demande pour établir la liaison de signalisation dédiée de partage ;
envoyer par le serveur de distribution de partage, un message de réponse d'enregistrement A11 au client de distribution de partage, accepter la demande et établir la liaison avec le client de distribution de partage.

5. Procédé selon la revendication 4, dans lequel après que ladite liaison de signalisation dédiée de partage a été établie, l'étape suivante est en outre comprise :
envoyer périodiquement, par le client de distribution de partage, le message de demande d'enregistrement A11 au serveur de distribution de partage selon une période négociée mutuellement ; envoyer par le serveur de distribution de partage, le message de réponse d'enregistrement A11 au client de distribution de partage et renouveler la liaison de signalisation dédiée de partage.

6. Procédé selon la revendication 2, dans lequel ladite étape d'élimination de la liaison de signalisation dédiée de partage comprend en outre les étapes suivantes de :
envoyer, par la station de base, au client de distribution de partage, une instruction d'élimination de la liaison de signalisation dédiée de partage avec le serveur de distribution de partage ;
envoyer, par le client de distribution de partage, le message de demande d'enregistrement A11 au serveur de distribution de partage pour faire une demande pour éliminer la liaison de signalisation dédiée de partage;
envoyer par le serveur de distribution de partage, le message de réponse d'enregistrement A11 au client de distribution de partage, accepter la demande et l'élimination de la liaison entre eux.

7. Procédé selon la revendication 1, dans lequel ladite signalisation dédiée de partage est un message de demande d'enregistrement de partage, et ladite étape d'encapsulation, par l'émetteur de signalisation de partage, du message dans la couche la plus intérieure de l'interface de données et d'envoi du message au récepteur de signalisation de partage par l'intermédiaire de la liaison de signalisation dédiée de partage comprend l'étape suivante pour :
encapsuler par le client de distribution de partage, le message de demande d'enregistrement de partage dans l'encapsulation d'acheminement générique d'interface A10, et envoyer le message au serveur de distribution de partage par l'intermédiaire de la liaison de signalisation dédiée de partage, et régler le GREKey à 0 pour montrer qu'une signalisation dédiée de partage est comprise dans le message.

8. Procédé selon la revendication 1, dans lequel ladite signalisation dédiée de partage est un message d'acceptation d'enregistrement de partage, et ladite étape d'encapsulation, par l'émetteur de signalisation de partage, du message dans la couche la plus intérieure de l'interface de données et d'envoi du message au récepteur de signalisation de partage par l'intermédiaire de la liaison de signalisation dédiée de partage comprend l'étape suivante pour :
encapsuler par le serveur de distribution de partage, le message d'acceptation d'enregistrement de partage dans l'encapsulation d'acheminement générique d'interface A10 et envoyer le message au client de distribution de partage par l'intermédiaire de la liaison de signalisation dédiée de partage, et régler le GREKey à 0 pour montrer qu'une signalisation dédiée de partage est comprise dans le message.
